Europäisches Patentamt

European Patent Office

Office européen des brevets

(19)

(11) Veröffentlichungsnummer: **0 238 570 B1**

(12) **EUROPÄISCHE PATENTSCHRIFT**

(45) Veröffentlichungstag der Patentschrift: **27.12.91**

(51) Int. Cl.5: **D06F 39/08**

(21) Anmeldenummer: **86905731.5**

(22) Anmeldetag: **02.10.86**

(86) Internationale Anmeldenummer:
**PCT/DE86/00400**

(87) Internationale Veröffentlichungsnummer:
**WO 87/02078 (09.04.87 87/08)**

(54) **WASCHMASCHINE ODER WASCHTROCKNER MIT EINRICHTUNGEN ZUR VERMEIDUNG VON WASCHMITTELVERLUSTEN.**

(30) Priorität: **03.10.85 DE 3535326**
**16.11.85 DE 3540741**
**25.01.86 DE 3602232**
**25.01.86 DE 3602217**
**14.03.86 DE 3608579**

(43) Veröffentlichungstag der Anmeldung:
**30.09.87 Patentblatt 87/40**

(45) Bekanntmachung des Hinweises auf die
Patenterteilung:
**27.12.91 Patentblatt 91/52**

(84) Benannte Vertragsstaaten:
**AT CH DE FR GB IT LI NL SE**

(56) Entgegenhaltungen:
**DE-A- 2 712 093      DE-A- 2 818 464**
**DE-A- 3 106 604      DE-U- 1 912 519**
**DE-U- 6 923 774      DE-U- 7 813 695**
**FR-A- 2 142 023      GB-A- 2 099 462**
**US-A- 2 972 877      US-A- 3 691 797**

(73) Patentinhaber: **Miele & Cie. GmbH & Co.**
**Carl-Miele-Strasse**
**W-4830 Gütersloh 1(DE)**

(72) Erfinder: **ZINKANN, Peter**
**Thesings Allee 11a**
**W-4830 Gütersloh 1(DE)**
Erfinder: **HÜTTEMANN, Wilfried**
**Rasenstr. 11**
**W-4800 Bielefeld 15(DE)**
Erfinder: **FEY, Hans**
**Kuhlmannsweg 18**
**W-4830 Gütersloh 1(DE)**
Erfinder: **STORK, Friedrich, Wilhelm**
**Zum Spellbrink 7**
**W-4830 Gütersloh 1(DE)**
Erfinder: **HERDEN, Rudolf**
**Weisses Venn 43**
**W-4836 Herzebrock(DE)**
Erfinder: **SCHULTZ, Wilfried**
**Doheermannshöhe 23**
**W-4830 Gütersloh 1(DE)**

## Beschreibung

Die Erfindung bezieht sich auf eine Waschmaschine oder einen Waschtrockner mit einer automatischen Waschmittel-Zugabevorrichtung sowie einer Programmsteuereinrichtung und einer die Waschlauge über einen Ablaufschlauch abfördernden Laugenpumpe und mit Einrichtungen zur Vermeidung von Waschmittelverlusten. Weiterhin ist ein vorteilhaftes Verfahren zur Steuerung dieser Waschgeräte angegeben.

Es ist seit jeher das Bestreben der Waschmaschinenindustrie, den Anteil des beim Waschprozeß unausgenutzten Waschmittels so gering wie möglich zu halten. Zur Lösung dieses Problems sind bereits eine Reihe unterschiedlicher Vorschläge gemacht worden. Aus DE-U-78 13 695 und DE-A-31 06 604 sind Ausführungen bekannt bei denen im Laugenbehälterablauf ein sog. Auftriebskörper angeordnet ist, der durch den Rückstau des im Ablaufschlauch befindlichen Restwassers hochschwimmt und somit die Ablauföffnung verschließen soll. In DE-U-78 13 695 ist eine Ausführung beschrieben, bei der das für die Funktion des Auftriebskörpers notwendige Wasservolumen zur Erzeugung des erforderlichen hydrostatischen Druckes, der den Auftriebskörper in der Auslaßöffnung des Laugenbehälters hält, durch eine Frischwasserzufuhr im Bypass in das Ablaufsystem der Maschine erhalten wird.

In der Praxis sind derartige Verschlußeinrichtungen jedoch nicht realisiert worden, da es sich als sehr schwierig gezeigt hat, die Ablauföffnung wirklich dicht zu verschließen. Jede kleine Undichtigkeit führt über kurz oder lang zum Ausgleich der im Ablaufschlauch befindlichen Restwassersäule, d. h., das Wasser gelangt in den Laugenbehälter und die Auftriebskraft des Hohlkörpers reicht nicht mehr für ein sicheres Verschließen der Ablauföffnung aus. Beim nachfolgenden Waschgang kann dann trotzdem noch Waschmittel durch die Ablauföffnung in den Sumpf der Maschine gelangen und somit für den Waschprozeß verloren gehen.

Zur Vermeidung von Undichtigkeiten wird in der US-A-3 691 797 bei einer Waschmaschine mit einem Auftriebskörper im Ablaufsystem zur Vermeidung von Laugenrückfluß in den Laugenbehälter eine Dichtungsanordnung für den Auftriebskörper vorgeschlagen.

Eine andere Ventilausbildung für den gleichen Zweck ist aus der DE-PS 27 12 093 bekannt geworden. Das darin beschriebene Klappenventil ist aufwendig und nicht einfach im Laugenbehälterablauf unterzubringen. Weiterhin kann es leicht durch Flusen oder dgl. am selbsttägigen Verschließen gehindert werden.

Ferner wurde auch schon in der DE-U-6 923 774 vorgeschlagen, im Ablaufsystem einer Waschmaschine ein zusätzliches Reservoir zu schaffen, damit immer genügend Restwasser im Ablaufsystem stehen bleibt, um dadurch das eingeführte Waschmittel vor dem Absinken in den Ablauf zu hindern. Weiterhin war es durch die DE-A-2 818 464 bekannt, die Laugenpumpe vor dem Wasserzulauf für den ersten Waschgang kurzzeitig einzuschalten, damit das Restwasser aus der Druckleitung nach Abschalten der Pumpe in den Bereich des Ablaufs zurückströmt und dort eine Wasservorlage zur Vermeidung von Waschmittelverlusten bildet.

Aus der DE-U-19 12 519 ist außerdem eine Waschmaschine bekannt, bei der eine Vorrichtung dafür sorgt, daß die Zulaufleitung zur Pumpe vor dem Einspülen von Waschmittel mit Wasser gefüllt ist.

Diese Maßnahmen allein haben sich als untauglich erwiesen. Das meist körnige Waschmittel gelangt trotzdem vor seiner Auflösung in den Bereich des Ablaufs und wird unausgenutzt beim Abpumpen herausbefördert.

So waren bislang alle Bemühungen, auf die vorbeschriebene Art und Weise Waschmittelverluste zu vermeiden, ohne den gewünschten Erfolg geblieben.

Der Erfindung liegt die Aufgabe zugrunde, eine Waschmaschine oder einen Waschtrockner der eingangs genannten Art mit einem sicher funktionierenden und den Laugenbehälterablauf dicht verschließenden Auftriebskörper derart auszubilden, daß der Auftriebskörper zur Gewährleistung ausreichender Dichtigkeit mit entsprechendem hydrostatischen Druck im Dichtungssitz gehalten wird und daß Undichtigkeiten am Dichtungssitz vermieden werden.

Diese Aufgabe soll ohne zusätzliche Mittel wie z. B. eine zusätzliche Frischwasserzuleitung (Bypass) gelöst werden.

Die Lösung der vorstehenden Aufgabe wird durch die Kombination der im Anspruch 1 angegebenen Merkmale erzielt. Ein vorteilhaft ausgestaltetes Steuerverfahren ergibt sich aus Anspruch 6. Weitere Merkmale und Weiterbildungen der Erfindung ergeben sich aus den rückbezogenen Ansprüchen. Es hat sich gezeigt, daß erst durch die erfindungsgemäß kombinierten Merkmale eine Einrichtung geschaffen werden konnte, die in der Praxis einsetzbar ist und sicher funktionierend den Verlust von unausgenutztem Waschmittel vermeidet. Durch das zusätzliche Wasserreservoir im Auflaufschlauch und durch die besondere Ausbildung im Laugenbehälterablauf wird vorteilhaft erreicht, daß der Auftriebskörper eine ausreichende Auftriebskraft erfährt, um im Zusammenwirken im der Dichtungsanordnung für ein sicheres Verschließen der Laugenbehälterablauföffnung zu sorgen.

Die Integration des Wasserreservoirs in dem Rücklaufsicherungsteil der Maschine bringt den Vorteil mit sich, daß nicht noch ein zusätzliches Teil in den Ablaufschlauch der Maschine zwischengeschaltet werden muß. Ferner ist die Anbringung des Wasserreservoirs innerhalb des Maschinengehäuses vorzuziehen, da hierdurch Manipulationen ausgeschlossen werden, die sonst an einem außerhalb des Gehäuses befindlichen Teil vorgenommen werden könnten und die die Wirksamkeit der Ventilvorrichtung gefährden würden.

Durch die besondere Struktur des Auftriebskörpers wird das Eindringen von Wasser in sein Inneres verhindert und es können preiswertere Materialien und Fertigungsverfahren zur Herstellung eines derartigen Auftriebskörpers verwendet werden.

Die zusätzlichen, in den Ansprüchen 6 - 9 angegebenen Maßnahmen bringen eine weitere Verbesserung, durch die die Anpreßkraft auf den Auftriebskörper sichergestellt oder erhöht wird.

Weiterhin sollen Sicherheitsvorkehrungen getroffen werden, die ein unerwünschtes Ansprechen der zusätzlichen Steuerungsschritte verhindern, wenn dies programmtechnisch unerwünscht sein sollte.

Ein Ausführungsbeispiel der Erfindung ist in den Zeichnungen schematisch dargestellt.

Es zeigen:

Fig. 1
eine Waschmaschine in vereinfachter Form mit den zur Erläuterung der Erfindung erforderlichen Elementen in Vorderansicht,

Figur 2
in vereinfachter Form ausschnittsweise das Ablaufsystem einer Trommelwaschmaschine herkömmlicher Bauart,

Figur 3
den Bereich der Laugenbehälterablauföffnung im Schnitt als Detail,

Figur 4
einen kugelförmigen Auftriebskörper mit seinem Füllungsteil im noch nicht zusammengefügten Zustand, teilweise im Schnitt,

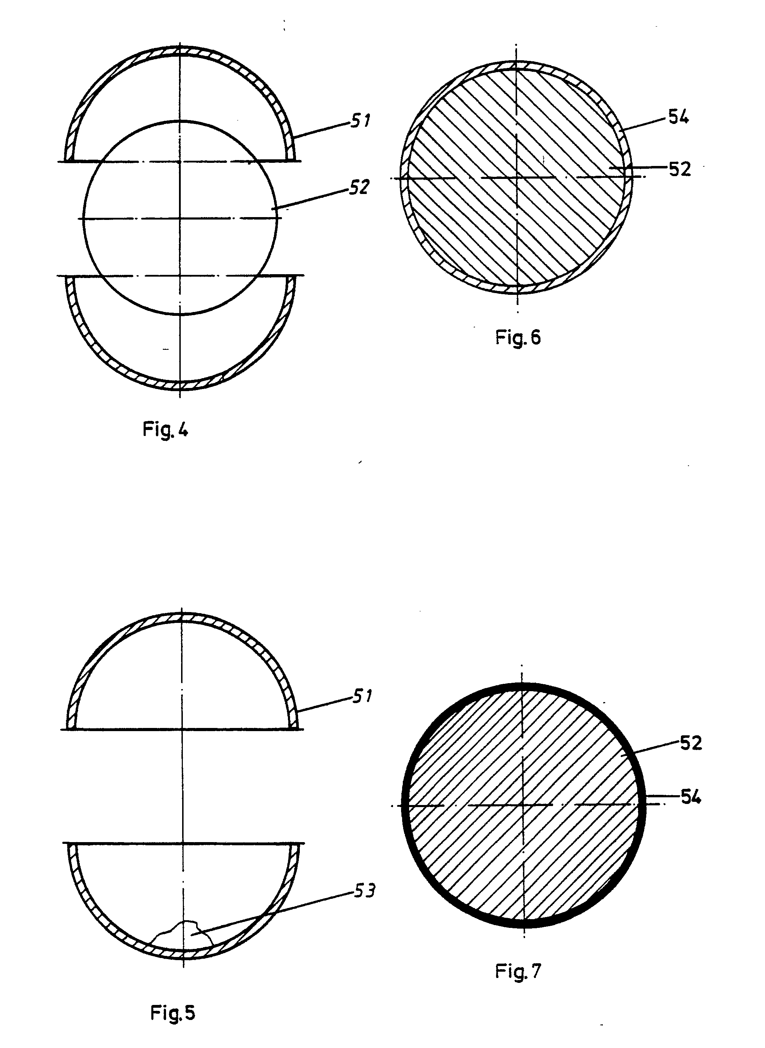

Figur 5
einen Auftriebskörper wie Figur 4, bei dem das Füllungsteil durch die Eingabe eines Zweikomponenten-Schaumes gebildet wird,

Figur 6 und Figur 7
jeweils einen Auftriebskörper mit einem Füllungsteil und einer Beschichtung im Schnitt.

An dem Laugenbehälter (1) einer Trommelwaschmaschine ist in üblicher Weise der Laugenbehälterablauf (2) in Form eines Gummischlauchteiles angeschlossen. Der Laugenbehälterablauf (2) besteht aus der Kammer (21) sowie der Faltenmanschette (22) und ist vorteilhaft einstückig ausgebildet. Über die Laugenpumpe (3) und den Ablaufschlauch (4) wird das Wasser aus der Waschmaschine herausbefördert.

Innerhalb der Kammer (21) des Laugenbehälterablaufs (2) ist der Auftriebskörper (5) angeordnet. In bevorzugter Ausführung ist er als Kunststoff-Hohlkörper ausgeführt.

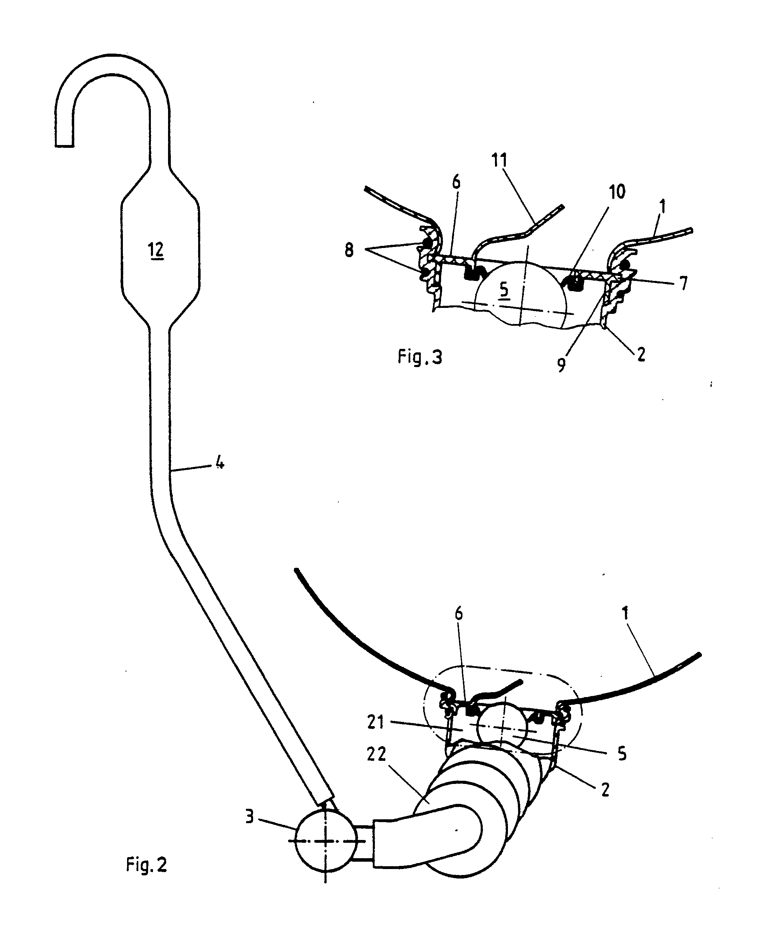

Wie in der Figur 3 näher dargestellt ist, wird in den Laugenbehälterablauf (2) ein Einsatzteil (6) eingesetzt. Mit seinem Flansch (7) wird das Einsatzteil (6) in den Laugenbehälterablauf (2) eingesetzt. Die Befestigung des Laugenbehälterablaufs (2) und des Einsatzteiles (6) kann in üblicher Weise durch Spannringe (8) erfolgen.

Das Einsatzteil (6) besitzt einen nach unten gerichteten, zylinderischen Ansatz (9), der für einen dichten Sitz im gummiförmigen Laugenbehälterablauf (2) sorgt.

Im Bereich der Ablauföffnung des Einsatzteiles (6) ist auf dessen Unterseite ein Dichtelement (10) befestigt, welches eine nach innen zum Auftriebskörper (15) gerichtete Dichtlippe aufweist. Das Dichtelement (10) kann wie dargestellt an dem Einsatzteil (6) in bekannter Weise eingesetzt werden, jedoch wäre aber auch eine einstückige Ausführung denkbar, bei der die Dichtlippe direkt an dem Einsatzteil (6) angeformt ist.

Auf der Oberseite des Einsatzteiles (6) ist ein Leitelement (11) angeformt, welches die Aufgabe hat, einen sich beim Schleudern evtl. bildenden Wassermantel zu brechen und zusätlich dafür zu sorgen, daß das eingespülte Waschmittel noch zum Teil vom kritischen Bereich der Ablauföffnung ferngehalten wird.

Die Laugenpumpe (3) fördert im Abpumpschritt das Wasser über den Ablaufschlauch (4), die Rücklaufsicherung (13) und den sog. Ablaufkrümmer (14) in das öffentliche Abwassernetz.

Die Rücklaufsicherung (13) ist ein einstückiges Kunststoffteil, in dem die Kanäle (15 und 16) gebildet sind. An seinem unteren Ende besitzt das Rücklaufsicherungsteil (13) Anschlußstutzen (17) für die wasserführenden Schläuche und an seinem oberen Ende einen Anschlußstutzen (18) für einen Belüftungsschlauch. Über nicht näher dargestellte, angeformte Befestigungsösen wird das Rücklaufsicherungsteil (13) an einer Innenwand des Gehäuses angebracht.

Im oberen Bereich des Rücklaufsicherungsteils (13) wird das Wasserreservoir (12) durch eine volumenvergrößernde Aufweitung in dem während des Abpumpens der Waschlauge als Steigkanal (15) wirkenden Teils der Rücklaufsicherung (13) gebildet.

Für die funktionsgerechte Wirkung des Kugelventils ist es wichtig, daß das Wasserreservoir (12) möglichst hoch innerhalb der Maschine angeordnet wird und daß die nach Abschalten der Laugenpumpe sich bildende Wassersäule im Kanal (15) so hoch wie möglich stehen bleibt, damit der Auftriebskörper (5) durch das zurückströmende Wasser mit hoher Kraft gegen das im Laugenbehälterablauf angeordnete Dichtelement (10) gedrückt wird. Aus diesem Grund sollte das Wasserreservoir (12) im oberen Überlaufbereich von Kanal (15) zu Kanal (16) vorgesehen werden.

Die Figur 4 zeigt einen Auftriebskörper, der aus zwei Halbschalen (51) und einem Füllungsteil (52) aus geschäumten Material besteht. Bei dem Material für das Füllungsteil ist darauf zu achten, daß es ein sehr geringes spezifisches Gewicht, deutlich kleiner als eins, aufweist und daß dessen Aufsaugvermögen ebenfalls sehr gering ist. Die Halbschalen (51) können dabei aus einem hochwertigen Thermoplast bestehen, während das Füllungsteil (52) aus einem geschäumten Kunststoff wie Styropor oder dgl. hergestellt sein kann. Die Halbschalen (51) werden unter Einschluß des Füllungsteils (52) vorzugsweise durch Verschweißen ihrer Stoßflächen zusammengefügt. Denkbar wäre hier auch eine mechanische Rastverbindung oder eine wasserbeständige Klebverbindung im Bereich der aneinanderstoßenden Schalenränder.

Bei dem in der Figur 5 dargestellten Ausführungsbeispiel wird das Füllungsteil (52) durch die Eingabe eines Zweikomponenten-Schaumes (53) vor dem Zusammenfügen der Halbschalen (51) gebildet. Während oder nach der Verbindung der beiden Halbschalen (51) miteinander findet im Inneren des geschlossenen Auftriebskörpers eine chemisch-thermische Reaktion statt, durch die sich der Zweikomponenten-Schaum (53) ausdehnt und somit den Innenraum des Auftriebskörpers ausfüllt. Wenn ein Zweikomponenten-Schaum zur Verfügung steht, der nicht hygroskopisch ist, könnte man diesen auch in den hohlen Auftriebskörper nachträglich einspritzen.

Bei der Ausführungsform nach der Figur 6 wird zunächst das Füllungsteil (52) aus einem geschäumten Kunststoff hergestellt, bei dem dann durch Tauchen, Sintern, Umspritzen oder dgl. die Beschichtung (54) gebildet wird. Schließlich kann bei der Herstellung eines geeigneten Auftriebskörpers das bekannte Mehrkomponenten-Spritzgieß-Verfahren angewendet werden. Hierbei wird innen ein preiswerter Kunststoff als Füllungsteil (52) verwendet, der außen mit einer Beschichtung (54) aus einem hochwertigen Thermoplast versehen ist.

Das grundsätzliche Prinzip der Erfindung wird nachstehend anhand der Fig. 2 näher erläutert:
Nach Beendigung des Waschprogramms wird die Laugenpumpe (3) abgeschaltet und das aus dem Ablaufschlauch (4) und aus seinem Wasserreservoir (12) zurückströmende Restwasser gelangt in den Laugenbehälterablauf (2). Dadurch schwimmt der Auftriebskörper (5) mit ausreichender Auftriebskraft nach oben und wird in die Dichtungsaufnahme des Dichtelementes (10) gedrückt. Durch die relativ weiche Dichtlippe des Dichtelementes (10) wird eine sichere Abdichtung des Auftriebskörpers (5) innerhalb der Ablauföffnung erreicht. Beim nächstfolgenden Waschgang kann dann das eingespülte Waschmittel nicht mehr in das Ablaufsystem der Maschine gelangen und von dort unausgenutzt abgepumpt werden.

Nach längerer Standzeit kann es vorkommen, daß in der Zeit zwischen zwei Waschvorgängen über nicht ganz auszuschließende, geringe Undichtigkeiten, Wasser aus dem Ablaufsystem in den Laugenbehälter durchsickert. Dann könnte die auf den Auftriebskörper notwendige Auftriebskraft geschwächt sein und die Verschlußwirkung in dem Laugenbehälterablauf nicht eintreten. Abhilfe kann dadurch geschaffen werden, indem in der Steueranordnung der Waschmaschine Vorkehrungen getroffen werden, durch die die Laugenpumpe (3) der Maschine zu Beginn eines jeden neuen Waschvorgangs einmal kurzzeitig, z.B. für 2 - 6 Sec. eingeschaltet wird. Das in der Maschine befindliche Restwasser wird dadurch in den Ablaufschlauch (4) gedrückt und beim Zurückströmen wird der Auftriebskörper (5) wieder in den Dichtungssitz gedrückt.

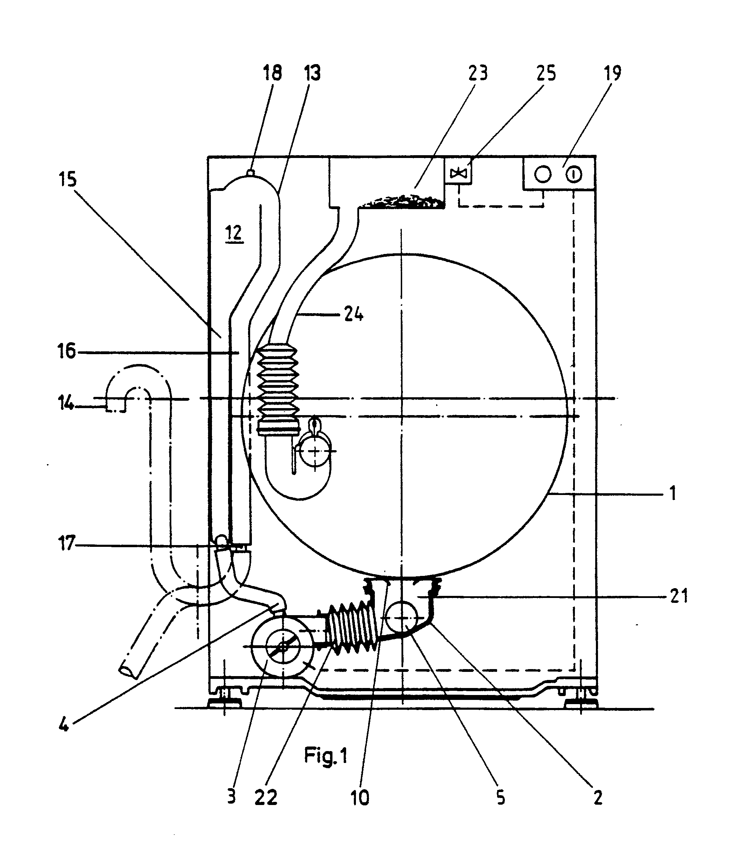

Bei der in der Fig. 1 dargestellten Anordnung ergibt sich folgender Funktionsablauf:
Von der Programmsteuereinrichtung (19) wird der Ablauf des Waschprogramms der Maschine gesteuert. Das für den Waschprozeß benötigte Waschmittel wird in bekannter Weise über den Waschmitteleinspülkasten (23) und den Verbindungsschlauch (24) dem Laugenbehälter (1) zugeführt. Ein Magnetventil (25) oder eine Gruppe von Magnetventilen ist in der Wasserzulaufleitung angeordnet und steuert in üblicher Art den Frischwasserzulauf der Maschine.

Am Ende eines Waschvorgangs steht in der Regel das Abpumpen der Waschflotte. Die von der Programmsteuereinrichtung (19) eingeschaltete Laugenpumpe (3) drückt das Ablaufwasser über den Kanal (15) aus der Maschine heraus. Wird die Laugenpumpe (3) abgeschaltet, so strömt das Restwasser aus dem Wasserreservoir (12) und dem Kanal (15) durch die Laugenpumpe zurück in die Kammer (21) des Laugenbehälterablaufs (2) und drückt den Auftriebskörper (5) in das Dichtelement (10). Der Laugenbehälterablauf ist somit verschlossen und beim nächstfolgenden Waschgang kann kein Waschmittel in das Ablaufsystem ungenutzt gelangen. Um nun hier die Wassersäule in dem Kanal (15) zu erneuern oder zu erhöhen, lassen sich steuerungstechnisch die nachfolgend beschriebenen Maßnahmen durchführen:

Vor einem mit der Zugabe von Waschmitteln beaufschlagten Programmabschnitt, z.B. der Vorwäsche oder der Hauptwäsche, wird das Magnetventil (25) von der Programmsteuereinrichtung (19) kurzzeitig eingeschaltet und Frischwasser wird über einen nicht näher dargestellten Bypass oder eine nicht mit Waschmitteln belegte Einspülkammer des Waschmitteleinspülkastens (23) in den Laugenbehälter (1) geführt. Nach einer Verzögerungszeit, die das Einfließen dieses Wassers am Boden des Laugenbehälters (1) sicherstellt, schaltet die Programmsteuereinrichtung (19) die Laugenpumpe (3) eine kurze Zeit ein, so daß das Wasser aus dem Laugenbehälter (1) ins Ablaufsystem gezogen wird. Die Zulaufmenge des Frischwassers und die Einschaltzeiten des Magnetventils (25) sowie der Laugenpumpe (3) werden so gewählt, daß sich die Wassersäule im Kanal (15) bis zur Oberkante des Wasserreservoirs (12) bilden kann. Hierbei kann es ausreichen, das Magnetventil (25) für mindetens 3 sec. einzuschalten und nach mindestens 10 sec. vom Einschaltzeitpunkt des Magnetventils (25) an die Laugenpumpe (3) für 1 sec. einzuschalten.

In einer anderen Ausführung, während eines laufenden Waschprogramms, kann das Magnetventil (25) am Ende eines Programmabschnitts, z.B. am Ende der Vorwäsche, kurzzeitig eingeschaltet werden. Das kurze Abpumpen durch Einschalten der Laugenpumpe (3) kann dann zu Beginn des nächsten Programmabschnitts, der Hauptwäsche, erfolgen.

Eine weitere vorteilhafte Maßnahme kann darin bestehen, grundsätzlich nach Beendigung des eigentlichen Waschprozeßes nach dem Schleudern, das Magnetventil (25) und die Laugenpumpe (3) in der vorbeschriebenen Weise einzuschalten.

Eine ebenfalls günstige Vorkehrung kann dadurch getroffen sein, bei Beendigung des Waschprogramms, des Programmabschnitts "Schleudern", die Laugenpumpe (3) bis zum tatsächlichen Stillstand der Wäschetrommel einschaltbar zu halten und nicht wie üblich zusammen mit dem Schleudermotor abzuschalten. Dadurch wird verhindert, daß durch Erschütterungen beim Auslaufen der Trommel Undichtigkeiten durch Bewegungen des Auftriebskörpers (5) in der Dichtungsanordnung auftreten können.

Es kann aber auch der Fall eintreten, daß das kurzzeitige Einschalten der Laugenpumpe (3) zu einem unerwünschten Zeitpunkt erfolgt. Hat der Benutzer ein Waschprogramm gestartet, bei dem bereits das Waschmittel eingespült wurde, und entschließt er sich z.B. zu einem Neustart für ein geändertes Programm, so würde das gesamte Waschmittel in den Ablaufsumpf gezogen, ohne für einen Waschprozeß ausgenutzt werden zu können. Hier wird dadurch Abhilfe geschaffen, daß die Programmsteuereinrichtung (19) der Maschine Steuerungsmittel enthält, die das kurzzeitige Einschalten der Laugenpumpe (3) verhindern, wenn wie zuvor beschrieben die Einspülung des Waschmittels bereits erfolgte. In der praktischen Ausführung kann die Programmsteuereinrichtung (19) dabei einen Speicher, z.B. einen NVRAM enthalten, der den letzten Programmstatus abspeichert und das Programm unter Auslassung der Ansteuerung der Laugenpumpe (3) und des Magnetventils (25) fortführt. Dadurch wird ein unerwünschtes Abpumpen von Waschmitteln wirksam vermieden.

**Patentansprüche**

1. Waschmaschine oder Waschtrockner mit einer automatischen Waschmittel-Zugabevorrichtung sowie einer Programmsteuereinrichtung, einer die Waschlauge über einen Ablaufschlauch abfördernden Laugenpumpe und mit einer Einrichtung zur Vermeidung von Waschmittelverlusten in Form eines im Laugenbehälterablauf (2) angeordneten Auftriebskörpers (5), der durch seine Auftriebskraft nach Abschalten der Laugenpumpe (3) durch das zurückströmende Wasser aus dem Ablaufschlauch (4) die Ablauföffnung des Laugenbehälters (1) verschließt, wobei der Laugenbehälterablauf (2) als einstückiges Gummischlauchteil ausgeführt ist und eine Kammer (21) für den Auftriebskörper (5) sowie eine Faltenmanschette (22) aufweist,
dadurch gekennzeichnet,
daß der Ablaufschauch (4) mit einem zusätzlichen Wasserreservoir (12) an einer hochgelegenen Stelle innerhalb des Maschinengehäuses ausgebildet ist, wobei das Wasserreservoir (12) in einem Teil der Ablaufleitung integriert ist, welcher als Rücklaufsicherung (13) für die Waschmaschine ausgebildet ist,

daß im Laugenbehälterablauf (2) ein Einsatzteil (6) mit seinem Flansch (7) einsetzbar angeordnet ist, und wobei an dem Einsatzteil (6) ein zylindrischer Ansatz (9) angeformt ist, der in den Laugenbehälterablauf (2) hineinragt, und daß dieses Einsatzteil (6) mit einem Dichtelement (10) verbunden ist, welches die Ablauföffnung im Zusammenwirken mit dem Auftriebskörper (5) abdichtet und daß das Dichtelement (10) eine nach innen zum Auftriebskörper (5) gerichtete weiche Dichtlippe aufweist.

2. Waschmaschine oder Waschtrockner nach Anspruch 1,
dadurch gekennzeichnet,
daß die Rücklaufsicherung (13) zwei nebeneinander angeordnete Kanäle (15, 16) aufweist, wobei der während des Abpumpens der Waschlauge als Steigkanal (15) dienende Teil in seinem oberen Bereich eine volumenvergrößernde Aufweitung, welche das Wasserreservoir bildet, aufweist, daß die Rücklaufsicherung (13) an der Innenseite einer Gehäusewand befestigt ist und daß sich die Aufweitung in Richtung des Gehäuseinneren der Maschine erstreckt.

3. Waschmaschine oder Waschtrockner nach Anspruch 2,
dadurch gekennzeichnet,
daß die Rücklaufsicherung (13) mit dem integrierten Wasserreservoir (12) als einteiliges Kunststoffteil ausgebildet ist, welches an seinem unteren Ende zwei Anschlußstutzen (17) für Wasserschläuche und an seinem oberen Ende einen Anschlußstutzen (18) für einen Belüftungsschlauch aufweist und daß an dem Kunststoffteil Befestigungsösen angeformt sind.

4. Waschmaschine oder Waschtrockner nach Anspruch 1,
dadurch gekennzeichnet,
daß der Auftriebskörper (5) aus zwei zusammenfügbaren Halbschalen (51) aus Kunststoff besteht und mit einem geschäumten Material gefüllt ist, wobei das Material ein geringes spezifisches Gewicht und ebenfalls ein geringes Flüssigkeitsaufsaugvermögen aufweist.

5. Waschmaschine oder Waschtrockner nach Anspruch 1,
dadurch gekennzeichnet,
daß die Programmsteuereinrichtung Steuermittel aufweist, welche ein im Frischwasserzulauf der Waschmaschine angeordnetes Magnetventil kurzzeitig vor einem die Zugabe von Waschmitteln veranlassenden Programmschritt öffnen, so daß ein Frischwasserzulauf in den Laugenbehälter über einen Bypass zum Waschmitteleinspülkasten oder über eine nicht mit Waschmitteln beaufschlagte Waschmittelkammer des Waschmitteleinspülkastens von der Programmsteuereinrichtung veranlaßt wird.

6. Verfahren zur Steuerung einer Waschmaschine oder eines Waschtrockners gemäß Anspruch 5, wobei von der Programmsteuereinrichtung (19) der Maschine vor einem die Zugabe von Waschmitteln veranlassenden Programmabschnitt ein in der Wasserzulaufleitung angeordnetes Magnetventil (25) geöffnet wird,
dadurch gekennzeichnet,
daß die das Ablaufwasser fördernde Laugenpumpe (3) kurzzeitig angeschaltet wird, und daß die Öffnungszeit des Magnetventils (25) 3 - 10 sec. und die Einschaltzeit der Laugenpumpe (3) 1 - 3 sec. beträgt.

7. Verfahren zur Steuerung einer Waschmaschine oder eines Waschtrockners nach Anspruch 6,
dadurch gekennzeichnet,
daß die Steuermittel der Programmsteuereinrichtung zuerst ein Öffnen des Magnetventils veranlassen und danach verzögert die Laugenpumpe einschalten, wobei die Verzögerungszeit von mindestens 10 sec. ein Einfließen des Frischwassers in den Laugenbehälter unter Umgehung einer mit Waschmittel gefüllten Kammer des Waschmittelbehälters sicherstellt, wobei die Zulaufmenge des Frischwassers bzw. die Öffnungszeit des Magnetventils und die Einschaltzeit der Laugenpumpe so gewählt werden, daß sich die Wassersäule in einem Kanal bis zur Oberkante des Wasserreservoirs ausbilden kann.

8. Verfahren zur Steuerung einer Waschmaschine oder eines Waschtrockners nach Anspruch 6 oder 7,
dadurch gekennzeichnet,
daß bei Beendigung des Waschprogramms, des Programmabschnitts "Schleudern", die Laugenpumpe (3) bis zum Stillstand der Wäschetrommel eingeschaltet bleibt.

9. Verfahren zur Steuerung einer Waschmaschine oder eines Wäschetrockners nach Anspruch 6,
dadurch gekennzeichnet,
daß die Programmsteuereinrichtung (19) der Maschine Steuermittel enthält, die das kurzzeitige Einschalten der Laugenpumpe verhindern, wenn zuvor die Einspülung des Waschmittels erfolgt ist.

**Claims**

1. Washing machine or washer-drier, comprising an automatic detergent metering device, a programme controlling device, a drain pump which discharges the suds through a drain hose, and a means for preventing loss of detergent in the form of a float (5), located in the suds container outlet (2), which closes the outlet opening of the suds container (1) by means of its buoyancy as a result of the water flowing back from the drain hose (4) after the drain pump (3) has been switched off, the suds container outlet (2) being a single-piece rubber hose and comprising a chamber (21) for the float (5) and a concertina sleeve (22), characterised in that the drain hose (4) is provided with an additional water reservoir (12) at an elevated location inside the machine casing, the water reservoir (12) being incorporated into a section of the drain hose, which is an anti-reflux device (13) for the washing machine, an insert (6) is located in the suds container drain (2) so as to be insertable with its flange (7), and wherin a cylindrical extension (9) is moulded to fit onto the insert (6) and projects into the suds container drain (2), and this insert (6) is connected to a sealing element (10), which seals the drain opening in cooperation with the float (5), and the sealing element (10) has a loft sealing lip which is directed inwards towards the float (5).

2. Washing machine or washer-drier according to claim 1, characterised in that the anti-reflux device (13) comprises two adjacent ducts (15, 16), wherein the part, which serves as a riser duct (15) during drainage of the suds, is provided, in its upper section, with a volume-increasing widened part, which forms the water reservoir, the anti-reflux device (13) is mounted on the inner surface of a casing wall, and the widened part extends towards the casing interior of the machine.

3. Washing machine or washer-drier according to claim 2, characterised in that the anti-reflux device (13), together with its incorporated water reservoir (12), is a single-piece plastic part, which is provided with two connections (17) for water hoses at its lower end and with a connection (18) for a vent hose at its upper end, and mounting eyelets are moulded to fit onto the plastic part.

4. Washing machine or washer-drier according to claim 1, characterised in that the float (5) comprises two plastic interconnectable half-shells (51) and is filled with a foamed material, the material having a low specific weight and also a low fluid absorption capacity.

5. Washing machine or washer-drier according to claim 1, characterised in that the programme controlling device comprises controls which briefly open a solenoid valve, located in the fresh water inlet of the washing machine, prior to a programme step, which induces the addition of detergent, so that the programme controlling device induces a fresh supply of water to enter the suds container through a bypass to the detergent dispenser or through a detergent compartment of the detergent dispenser, the compartment not containing detergent.

6. Method of operating a washing machine or a washer-drier according to claim 5, wherein the programme controlling device (19) of the machine opens a solenoid valve (25), located in the water intake hose, prior to a programme step which induces the addition of detergent, characterised in that the drain pump (3), which conveys the waste water, is briefly switched on, and the solenoid valve (25) opens for 3 - 10 secs., and the drain pump (3) is switched on for 1 - 3 secs.

7. Method of operating a wasching machine or a washer-drier according to claim 6, characterised in that the controls for the programme controlling device initially induce the solenoid valve to open and then switch on the drain pump after a time lag, the time lag of at least 10 secs. ensuring that fresh water flows into the suds container and bypasses a detergent dispenser compartment filled with detergent, the quantity of fresh water supplied or the opening time of the solenoid valve and the switched-on time of the drain pump being so selected that the column of water can be formed in a duct up to the upper edge of the water reservoir.

8. Method of operating a washing machine or a washer-drier according to claim 6 or 7, characterised in that, upon termination of the washing programme, the spin cycle, the drain pump (3) remains switched on until the drum is stationary.

9. Method of operating a wasching machine or a washer-drier according to claim 6, characterised in that the programme controlling device (19) of the machine includes controls which prevent the drain pump from being briefly switched on if the detergent has previously been dispensed.

**Revendications**

1. Machine à laver ou machine à laver sécheuse comprenant un dispositif automatique d'addition de détergent, ainsi qu'un dispositif de commande à programme, une pompe à lessive pour évacuer la lessive par un tuyau d'évacuation et un dispositif pour éviter les pertes de détergent sous la forme d'un flotteur (5) qui est disposé dans l'évacuation(2)du réservoir à lessive et qui ferme l'orifice d'évacuation du réservoir à lessive (1) par sa force ascensionnelle, grâce à l'eau refluant du tuyau d'évacuation (4), après l'arrêt de la pompe à lessive (3), l'évacuation (2) du réservoir à lessive étant réalisée sous la forme d'un tronçon de tuyau en caoutchouc d'un seul tenant et présentant une chambre (21) destinée au flotteur (5), ainsi qu'un manchon à soufflet (22), caractérisée par le fait :

que le tuyau d'évacuation (4) est réalisé en comprenant un réservoir d'eau supplémentaire (12) en un endroit élevé à l'intérieur de la cuve de la machine, le réservoir d'eau (12) étant intégré à une partie de la conduite d'évacuation qui est réalisée sous la forme d'un dispositif antiretour (13) pour la machine à laver,

qu'une pièce rapportée (6) est disposée dans l'évacuation (2) du réservoir à lessive en y étant insérée par sa bride (7), un prolongement cylindrique (9) étant formé sur la pièce rapportée (6) pour faire saillie dans l'évacuation (2) du réservoir à lessive,

et que cette pièce rapportée (6) est reliée à un élément d'étanchéité (10) qui ferme de manière étanche l'orifice d'évacuation en coopération avec le flotteur (5), l'élément d'étanchéité (10) comportant une lèvre d'étanchéité souple dirigée vers l'intérieur dans la direction du flotteur (5).

2. Machine à laver ou machine à laver sécheuse selon la revendication 1, caractérisée par le fait que le dispositif antiretour (13) comporte deux canaux juxtaposés (15, 16), la partie qui sert de canal ascendant (15) pendant le pompage de la lessive présentant dans sa zone supérieure un élargissement d'agrandissement du volume qui constitue le réservoir d'eau, par le fait que le dispositif antiretour (13) est fixé sur le côté intérieur d'une paroi de la cuve, et par le fait que l'élargissement s'étend dans la direction de l'intérieur de la cuve de la machine.

3. Machine à laver ou machine à laver sécheuse selon la revendication 2, caractérisée par le fait que le dispositif antiretour (13) est réalisé avec le réservoir d'eau intégré (12) sous la forme d'une pièce en matière plastique d'un seul tenant qui comporte, à son extrémité inférieure, deux tubulures de raccordement (17) destinées à des tuyaux d'eau, et, à son extrémité supérieure, une tubulure de raccordement (18) destinée à un tuyau d'aération, et par le fait que des oeillets de fixation sont formés sur la pièce en matière plastique.

4. Machine à laver ou machine à laver sécheuse selon la revendication 1, caractérisée par le fait que le flotteur (5) se compose de deux demi-coquilles en matière plastique (51) qui peuvent être assemblées, et qu'il est rempli d'un matériau en mousse, le matériau présentant un poids spécifique faible et, également, un faible pouvoir d'absorption des liquides.

5. Machine à laver ou machine à laver sécheuse selon la revendication 1, caractérisée par le fait que le dispositif de commande à programme comporte des moyens de commande qui ouvrent une électrovanne disposée dans l'amenée d'eau fraîche de la machine à laver peu avant une phase du programme qui autorise l'addition de détergents, de sorte que le dispositif de commande à programme autorise une amenée d'eau fraîche dans le réservoir à lessive par l'intermédiaire d'une dérivation qui court-circuite la boîte de balayage du détergent par un courant d'eau ou par l'intermédiaire d'une chambre à détergent de la boîte de balayage du détergent par un courant d'eau qui n'est pas alimentée en détergents.

6. Procédé de commande d'une machine à laver ou d'une machine à laver sécheuse selon la revendication 5, dans lequel une électrovanne (25) disposée dans l'amenée d'eau est ouverte par le dispositif de commande à programme (19) de la machine avant une phase du programme qui autorise l'addition de détergents, caractérisé par le fait que l'on fait fonctionner un court instant la pompe à lessive (3) qui déplace l'eau d'évacuation, et par le fait que la durée d'ouverture de l'électrovanne (25) est comprise entre 3 et 10 secondes et la durée de fonctionnement de la pompe à lessive (3) entre 1 et 3 secondes.

7. Procédé de commande d'une machine à laver ou d'une machine à laver sécheuse selon la revendication 6, caractérisé par le fait que les moyens de commande du dispositif de commande à programme autorisent tout d'abord une ouverture de l'électrovanne et mettent ensuite en marche la pompe à lessive avec un retard, cependant que la durée du retard, laquelle est d'au moins 10 secondes, assure une arrivée de l'eau fraîche dans le réservoir à lessive en contournant une chambre du réservoir à détergent qui est remplie de détergent, et que la quantité d'eau fraîche amenée et, respectivement, la durée d'ouverture de l'électrovanne et la durée de fonctionnement de la pompe à lessive sont choisies de telle manière que la colonne d'eau puisse se constituer dans un canal allant jusqu'au bord supérieur du réservoir d'eau.

8. Procédé de commande d'une machine à laver ou d'une machine à laver sécheuse selon la revendication 6 ou 7, caractérisé par le fait que, lors de l'achèvement du programme de lavage, donc de la phase de programme "centrifugation", la pompe à lessive (3) reste en marche jusqu'à l'arrêt du tambour de lavage.

9. Procédé de commande d'une machine à laver ou d'une machine à laver sécheuse selon la revendication 6, caractérisé par le fait que le dispositif de commande à programme (19) de la machine contient des moyens de commande qui empêchent la mise en marche de la pompe à lessive pendant une courte durée lorsqu'un balayage du détergent par un courant d'eau a eu lieu précédemment.

Fig.1

Fig.3

Fig.2

Fig. 4

51

52

Fig. 6

54

52

Fig. 5

51

53

Fig. 7

52

54